# EUROPÄISCHE PATENTSCHRIFT

(11) **EP 1 876 093 B1**
(45) Veröffentlichungstag und Bekanntmachung des Hinweises auf die Patenterteilung: **19.06.2019**
(21) Anmeldenummer: 06014136.3
(22) Anmeldetag: 07.07.2006
(51) Int. Cl.: B63B 35/44, B63B 21/29, B63B 43/14, E02B 17/00, F03D 13/20, B63B 9/06, B63B 21/50, B63B 21/22

(54) **Windkraftanlage mit einem schwimmenden Offshore-Fundament**
Wind turbine with a floating offshore foundation
Éolienne avec une fondation offshore flottante

(43) Veröffentlichungstag der Anmeldung: 09.01.2008
(73) Patentinhaber: GICON windpower IP GmbH, 01219 Dresden (DE)
(72) Erfinder: Neumann, Michael, Dr., 09599 Freiberg (DE); Schlesinger, Bodo, 09517 Zöblitz (DE)
(74) Vertreter: Kailuweit & Uhlemann Patentanwälte Partnerschaft mbB

(56) Entgegenhaltungen:
- WO-A-03/004869
- DE-A1- 10 034 847
- DE-A1- 10 219 062
- FR-A1- 2 429 705
- GB-A- 2 025 337
- GB-A- 2 025 876
- GB-A- 2 110 601
- GB-A- 2 378 679
- US-A- 4 092 944
- US-A- 4 922 847
- US-A- 5 435 262

## Beschreibung

Die Erfindung betrifft eine Windkraftanlage mit einem schwimmenden Offshore-Fundament.

Der Anteil der Gewinnung an regenerativer Energie soll in den nächsten Jahrzehnten weltweit deutlich erhöht werden. Hierbei ist unter anderem auch das Anlegen so genannter Offshore-Windparks vorgesehen. Bei solchen Offshore-Windparks werden die einzelnen Windkraftanlagen nicht an Land, sondern im Wasser, insbesondere in Küstennähe aufgestellt. Die Gründung derartiger Offshore-Windkraftanlagen ist jedoch vergleichsweise kostenintensiv und mit Risiken verbunden. Dies gilt insbesondere, weil die in der Offshore-Technik für die Gasund Ölindustrie bereits verwendeten und praktisch erprobten Gründungsstrukturen für Windkraftanlagen aus wirtschaftlicher Sicht nicht übernommen werden können. Für Windkraftanlagen, die in Küstennähe, dem so genannten Nearshore-Bereich, aufgestellt werden, werden als Gründungsstruktur bisher vorzugsweise gerammte Stahlrohre großen Durchmessers (so genannte Monopile) verwendet. Allerdings ist diese Art der Gründungsstruktur wegen der großen Einspanntiefen und der erforderlichen großen Rohrdurchmesser nur für begrenzte Wassertiefen geeignet. Auch bestehen bei zyklischer, horizontaler Belastung, beispielsweise durch Eisschollen, noch ungelöste bodenmechanische Probleme. Bei größeren Wassertiefen werden derzeit hauptsächlich dreibeinige Gründungsstrukturen (so genannte Tripod) oder gitterartige Stahlrohrkonstruktionen (so genannte Jacket-Strukturen) verwendet. Diese werden auf dem Meeresboden aufgesetzt und mit Rammpfählen im Untergrund befestigt. Die Beschaffenheit des Baugrundes bzw. Untergrundes ist dabei die entscheidende Dimensionierungsgröße für die Gründungsstrukturen. Wegen ihres vergleichsweise großen Gewichtes und der komplizierten Strukturen sind diese Gründungsstrukturen zwar technisch umsetzbar, im Grunde genommen aber unwirtschaftlich. So beträgt das Gesamtgewicht für eine Tripod-Struktur bei 40 m Wassertiefe beispielsweise mehr als 1500 Tonnen. Alle bisherigen Gründungsstrukturen sind nur bei geringem Wellengang errichtbar und dauerhaft in Gänze gut mit dem Untergrund verbunden. Um die bekannten Gründungsstrukturen reparieren zu können, müssen diese rückgebaut und in Einzelteile zerlegt werden. Diese Maßnahmen müssen am Errichtungsort erfolgen und oftmals unter Wasser, in der Nähe des Meeresbodens.

Seit geraumer Zeit wird daher bereits an der Entwicklung so genannter schwimmender Offshore-Fundamente gearbeitet. Bei diesen Fundamenten soll ein im Wasser schwimmender Auftriebskörper, der am Meeresboden mit Zugmitteln verankert ist, ausreichend Auftriebskraft erzeugen, um das Gewicht einer Windkraftanlage abzustützen. Da für einen sicheren Betrieb von Windkraftanlagen deren Kopfbereich nur eine begrenzte Auslenkung erfahren darf, ist es bisher noch nicht gelungen, ein ausreichend stabiles schwimmendes Offshore-Fundament darzustellen, das selbst bei hohem Wellengang errichtet werden kann und zudem auch einfacher repariert werden kann. Das zu schaffende Offshore-Fundament soll ferner unabhängig von der Beschaffenheit des Untergrundes ab einer Wassertiefe von ca. 25 m einsetzbar sein.

Aus der Druckschrift DE 100 34 847 A1 sind eine Vorrichtung sowie ein Verfahren zur ortsfesten Positionierung von beispielsweise Windkraftanlagen auf dem oder im Wasser bekannt. Die Vorrichtung weist wenigstens einen als Fundament oder als Plattform für die Windkraftanlage dienenden und insbesondere als Hohlkörper ausgebildeten Auftriebskörper auf, der durch eine Verankerung in einer vorgegebenen Wassertiefe gehalten ist.

Durch die Druckschrift GB 2 110 601 A ist ein schwimmendes Offshore-Fundament bekannt, welches eine Stützstruktur mit Stützelementen aufweist. Diese sind mittels Knotenpunkten flüssigkeitsdicht miteinander verbunden. Der Mittelbereich ist als Mehrbein ausgebildet.Darüber hinaus sind Auftriebskörper vorhanden, die der Gewichtskraft entgegenwirkende Auftriebskräfte erzeugen.

Die Druckschrift GB 2 378 679 A offenbart eine Schwimmplattform für Windkraftanlagen, bei der der Mast der Windkraftanlage teleskopartig ausfahrbar ist.

Aus der Druckschrift GB 2 025 337 A ist ein Gewichtsanker zum Halten eines Offshore-Fundaments bekannt, der mit einer befüllbaren Außenhülle gestaltet ist. Dieser weist mehrere einzeln zu befüllende Kammern auf. Im unbefüllten Zustand ist dieser schwimmfähig.

Die Druckschrift US 4 922 847 A beinhaltet einen Gewichtsanker, der mit einem mit Steinen gefüllten Netz gebildet ist.

Die Druckschrift US 5 435 262 A offenbart eine tauchfähige Offshore-Plattform mit mindestens einem Ölspeichertank und einem festen zentralen Stützelement. Die Plattform umfasst weiterhin ein Deck, welches mit dem Stützelement und mehreren Auftriebskörpern gekoppelt ist.

Die Druckschrift FR 2 429 705 A1 betrifft Pontons, Ausleger und andere Wasserfahrzeuge, die einen Schwimmer aufweisen. Der Schwimmer besitzt dazu einen starren Außenmantel mit einem geschlossenzelligen Material sehr geringer Dichte befüllt ist. Das Material kann dazu auch selbstschäumend sein. Ziel ist ein unsinkbaren Schwimmer zu schaffen.

Es ist eine Aufgabe der Erfindung, eine Windkraftanlage mit einem schwimmenden Offshore-Fundament bereitzustellen, mit dem technisch machbar und zugleich wirtschaftlich eine Windkraftanlage im Offshore-Bereich schwimmend errichtet und gegebenenfalls jederzeit wieder abgebaut werden kann. Weiterhin soll das schwimmende Offshore-Fundament möglichst baugrundunabhängig sein, um insbesondere kostenintensive Baugrunduntersuchungen und Arbeiten im Unterwasserbereich weitgehend zu minimieren.

Die Aufgabe wird mit einer Windkraftanlage mit einem schwimmenden Offshore-Fundament nach Anspruch 1 Vorteilhafte Weiterbildungen der Erfindung sind in den Unteransprüchen definiert.

Dazu weist eine Windkraftanlage mit einem schwimmenden Offshore-Fundament die Windkraftanlage, eine Stützstruktur vollständig aus hohlen rohrförmigen Stützelementen, die mittels Knotenpunkten flüssigkeitsdicht miteinander verbunden sind, mit einem die Windkraftanlage stützenden Mittelbereich als Mehrbein mit einem äußeren, unteren Fußbereich, wobei das Mehrbein einen daran oben ausgebildeten Kopf als Koppelelement über der Wasseroberfläche aufweist, mit dem die Beine des Mehrbeins miteinander verbunden sind, und die unteren Fußbereichevon zwei sich nebeneinander befindenden Beinen des Mehrbeins durch einen hohl ausgebildeten und dem Auftrieb dienenden Querstab verbunden sind, mit der die Gewichtskraft der zu stützenden Last nach unten geleitet ist und die einen unteren Endbereich aufweist, der sich bei verankerter Lage des Offshore-Fundaments unter Wasser befindet, und Zugelemente, wobei unterhalb des äußeren unteren Endbereichs der Stützstruktur Anlenkbereiche zum Befestigen der Zugelemente ausgebildet sind, mit denen das Offshore-Fundament unter Wasser verankerbar ist, auf.

Weiterhin befinden sich Auftriebskörper unter Wasser, mit denen eine der Gewichtskraft entgegenwirkender Auftriebskraft erzeugt ist. Die Auftriebskörper sind oberhalb des unteren Endbereichs der Stützstruktur angeordnet. Eine Verankerung mit mindestens einem Gewichtsanker ist zum Halten der Auftriebskörper in einer vordefinierten Tiefe unter der Wasseroberfläche vorhanden, wobei der Gewichtsanker mit einer befüllbaren Außenhülle aus Stahlbeton mit mehreren einzeln zu befüllenden Kammern ausgestaltet ist. Damit ist die Außenhülle des Gewichtsankers im unbefüllten Zustand schwimmfähig. Die Außenhülle des Gewichtsankers ist dazu angepasst mit Wasser geflutet zu werden, um sie auf den Meeresgrund abzusenken. Darüber hinaus ist die Außenhülle des Gewichtsankers dazu angepasst, darin ein Material einzufüllen, welches ein höheres spezifisches Gewicht als Wasser aufweist.

Die Stützstruktur bildet mit ihrem unteren Endbereich eine Art stabilisierenden "Kiel", so dass eine besonders stabile Schwimmlage der gesamten Windkraftanlage erreicht wird. Ferner ist das Offshore-Fundament insgesamt derart schwimmfähig, dass es im Wesentlichen fertig hergestellt in schwimmender Weise zum Ort seiner Errichtung transportiert werden kann.

Die die Gewichtskraft nach unten leitende Stützstruktur ist vollständig aus hohlen, insbesondere rohrförmigen Stützelementen gebildet. Die derartigen Stützelemente der Stützstruktur übernehmen eine Doppelfunktion, indem sie einerseits die zu stützende Last tragen und andererseits zugleich als Auftriebskörper dienen. Gesamt betrachtet kann das derartige Offshore-Fundament daher besonders materialoptimiert hergestellt werden. Die Stützelemente sind bevorzugt als Rohre, insbesondere aus Stahl ausgebildet und geschottet. Um im Inneren der Rohre Dichtheitskontrollen durchführen zu können, sind die Rohre vorteilhaft begehbar gestaltet. Um den an den Rohren wirkenden statischen und dynamischen Kräften gezielt gerecht zu werden sind die Rohre ferner vorteilhaft mit verschiedenen Wandstärken gestaltet.

Die rohrförmigen Stützelemente des Offshore-Fundaments sind ferner mittels Knotenpunkten flüssigkeitsdicht verbunden. Dies ermöglicht es zum einen die Knoten als Extrabauteile auszubilden, welche auf die Anforderungen als Verbindungselement besonders angepasst werden können. Ferner können die Knotenpunkte Durchgangsöffnungen aufweisen, um von einem der Stützelemente in ein Anderes zu gelangen. Aus Kostengründen sind die Knotenpunkte bevorzugt als Gleichteile gestaltet. Ferner können die Knotenpunkte im Gegensatz zu den bevorzugt als Stahlrohre gestalteten Stützelementen als Gussteile, als Stahlbetonteile, Glasfaser verstärkte Kunststoffteile oder aus Aluminium hergestellt sein. Um eine stabile Lage des erfindungsgemäßen schwimmenden Offshore-Fundaments nach dessen Verankerung zu erzielen, ist es ferner vorteilhaft, unterhalb des äußeren unteren Endbereichs der Stützstruktur einen Anlenkbereich zum Befestigen eines Zugelements auszubilden, mit dem das Offshore-Fundament unter Wasser verankerbar ist. Das Zugelement greift dabei am tiefsten Punkt des Offshore-Fundaments insbesondere unmittelbar unterhalb des daran vorgesehenen mindestens einen Auftriebskörpers an. Mit anderen Worten greift das angeordnete Zugelement damit genau an jenem Bereich der Stützstruktur des Offshore-Fundaments an, wo mittels einem Auftriebskörper eine hohe Auftriebskraft erzeugt wird. Es ergibt sich dadurch eine vertikal wirkende Auftriebskraft am Anlenkbereich des Zugelements und es ist besonders von Vorteil, wenn das Zugelement selbst vertikal nach unten ausgerichtet ist.

Damit die bei dem schwimmenden Offshore-Fundament geforderte Steifigkeit erzielt werden kann, ist die Stützstruktur in deren Mittelbereich als ein die Last stützendes Mehrbein mit mindestens drei Beinen auszugestalten. Der Mittelbereich ist dabei in senkrechter Richtung der Gesamtanlage betrachtet jener Abschnitt des Offshore-Fundaments, welcher sich zwischen dem Befestigungsbereich der zu stützenden Last und dem bereits erwähnten unteren Endbereich des Offshore-Fundaments erstreckt. Das genannte bevorzugte Mehrbein ist insbesondere ein Dreibein, dessen Beine zueinander jeweils einen Winkel von ca. 50° bis ca. 70°, bevorzugt ca. 60° einschließen, so dass mit den Stützelementen dieses Abschnitts der Stützstruktur jeweils gleichseitige Dreiecke gebildet sind.

Darüber hinaus ist die Windkraftanlage mit einer Stützstruktur versehen ist, mit der die Gewichtskraft der zu stützenden Last nach unten geleitet ist und die zumindest abschnittsweise als ein die Last stützendes Mehrbein gestaltet ist. Ferner ist bei dieser Lösung an einem äußeren, unteren Fußbereich des Mehrbeins ein nach außen ragender Arm ausgebildet. Diese Art von Stützstruktur eines Offshore-Fundaments ist insbesondere im Hinblick auf eine modulare Bauweise der Gesamtstruktur von Vorteil, weil diese mit als Gleichteile gestalteten Stützelementen, Knotenpunkten und gegebenenfalls auch Armen selbst für verschiedenste Arten von zu stützenden Lasten ausgebildet sein kann. Insbesondere kann die Länge der nach außen ragenden Arme zwischen verschiedenen Typen von zu stützenden Windkraftanlagen entsprechend angepasst werden, um verschiedene Typen von Offshore-Fundamenten bereitzustellen. Ferner ist diese Gestalt einer Stützstruktur für ein Offshore-Fundament besonders im Hinblick auf die angestrebte Stabilität im verankerten Zustand von Vorteil. Die nach außen ragenden Arme tragen erheblich zu dieser Stabilität, insbesondere im Hinblick auf die an einer Gondel der zugehörigen Windkraftanlage wirkenden horizontalen Kräfte bei. Der bzw. die nach außen ragenden Arme erstrecken sich bevorzugt horizontal nach außen. Sie sind ferner vorteilhaft hohl gestaltet, so dass sie selbst als Auftriebskörper wirken. Ferner sind sie bevorzugt als Rohre geschaltet, deren Durchmesser größer ist, als ein die Beine des oben genannten Mehrbeins im Fußbereich verbindender Querstab. Die Länge der Arme ist bevorzugt etwa gleich wie der Abstand zwischen der Mittel- bzw. Hochachse des Offshore-Fundaments und dem Anlenkpunkt der nach außen ragenden Arme am äußeren, unteren Fußbereich des Mehrbeins. Bei einem aus gleichseitigen Dreiecken gebildeten Mehrbein entspricht dies etwa 2/3 der Länge der Beine des Mehrbeins.

Das oben genannte Mehrbein weist bevorzugt einen daran oben ausgebildeten Kopf bzw. oberen Knoten auf, mit dem die Beine des Mehrbeins miteinander verbunden sind. Der Kopf übernimmt bevorzugt mehrere Funktionen, indem er als ein die Stützelemente der Stützstruktur verbindender Knoten gestaltet ist und zugleich ein Koppelelement bzw. ein Koppelmodul für die zu stützende Last darstellt. Er ist bevorzugt als ein Adapter für diese Last gestaltet, der im verankerten Zustand des Offshore-Fundaments über der Wasseroberfläche angeordnet ist.

Wie bereits oben erwähnt ist das genannte Mehrbein bevorzugt in seinem Fußbereich geschlossen ausgebildet, was bedeutet, dass die unteren Fußbereiche von zwei sich nebeneinander befindenden Beinen des Mehrbeins durch einen Querstab verbunden sind. Der derartige Querstab ist bevorzugt hohl ausgebildet und wirkt damit wiederum als Auftriebskörper. Er erstreckt sich bei einer bevorzugten Ausgestaltung der Stützstruktur tangential in einer Querschnittsebene zur Hochachse des Offshore-Fundaments.

Zur Verankerung ist der Gewichtsanker zum Halten der Auftriebskörpers in einer vordefinierten Tiefe unter der Wasseroberfläche vorhanden, wobei der Gewichtsanker mit einer befüllbaren Außenhülle gestaltet ist. Wichtig ist dabei, dass der Gewichtsanker in vergleichsweise leichtem Zustand an den Ort der Errichtung des Offshore-Fundaments verbracht werden kann und dort durch ein Auffüllen seiner Außenhülle derart beschwerbar ist, dass er absinkt und dadurch seine rückhaltende Funktion entwickelt.

Es ist dabei besonders bevorzugt, dass die Außenhülle des Gewichtsankers im zumindest teilweise unbefülltem Zustand schwimmfähig gestaltet ist. Dies ist beispielsweise möglich, indem die Außenhülle kastenförmig ausgestaltet ist, wobei der sich im Kasten befindende Hohlraum den erforderlichen Auftrieb erzeugt. Zum Absenken wird im Kasten ein schweres Material eingebracht. Als schweres Material kann besonders vorteilhaft auch Wasser verwendet werden, indem die Außenhülle des Gewichtsankers dazu angepasst ist, mit Wasser geflutet zu werden, um sie auf den Meeresgrund abzusenken. Die Außenhülle bzw. der Kasten des Gewichtsankers ist bevorzugt aus Stahlbeton gestaltet, so dass sie im abgesenkten Zustand als solche ein derart großes Gewicht bildet, dass die erforderlichen Rückhaltekräfte zum Abspannen der oben genannten Stützstruktur mit ihren Auftriebskörpern in einer vordefinierten Wassertiefe ausreicht.

Alternativ oder zusätzlich ist die Außenhülle des Gewichtsankers bevorzugt dazu angepasst, darin ein Material einzufüllen, welches ein höheres spezifisches Gewicht als Wasser aufweist. Dieses Material wirkt dann zusätzlich als Ballast, so dass nochmals höhere Rückhaltekräfte bereitgestellt werden können. Der Ballast wird bevorzugt mit einer Steinschüttung, einer Betonschüttung oder einer Betonteileschüttung gebildet.

Aus Sicherheitsgründen ist bevorzugt die Außenhülle des Gewichtsankers mit mehreren einzeln zu befüllenden Kammern zu gestalten. Die Kammerstruktur dient ferner dazu, gegebenenfalls einzelne Abschnitte eines flächig am Meeresboden anliegenden Gewichtsankers besonders zu belasten. Ferner können die Kammern einzeln geflutet bzw. beschwert werden und auf diese Weise der Gewichtsanker während des Absenkvorgangs einfacher gehandhabt werden.

Es ist daher auch bevorzugt, dass mehrere, einzelne zu befüllende Kammern um einen an den Gewichtsanker ausgebildeten Zentralbereich ausgebildet sind. Der Gewichtsanker ist besonders bevorzugt mit insgesamt neun Kammern gestaltet, welche in drei Reihen nebeneinander angeordnet sind, derart, dass um eine sich in der Mitte befindende und als Anlenkpunkt für den Gewichtsanker dienende Kammer acht weitere, während des Absenkvorgangs noch zu befüllende Kammern verbleiben.

Die oben genannten Vorteile eines Anfertigens der Stützstruktur samt Auftriebskörper und/oder des Gewichtsankers des Offshore-Fundaments kommen voll zur Geltung, indem diese Bauteile insbesondere in einem Hafen in einer Slipanlage oder einem Trockendock angefertigt werden, von wo aus sie nachfolgend besonders einfach ins Wasser verbracht und an den Ort der Errichtung des Offshore-Fundaments verbracht werden können. Alternativ oder zusätzlich können die genannten Bauteile auch insgesamt oder in Einzelteilen mit einem Kran ins Wasser eingehoben werden.

Eine weitere vorteilhafte Art der Herstellung der genannten Bauteile ist deren Anfertigung in einer Pontonanlage mit Absenkeinrichtung. Voreilhaft ist dabei, das sich der Ponton gegebenenfalls bei zunehmender Fertigstellung der Stützstruktur samt Auftriebskörper und/oder des dort gefertigten Gewichtsankers selbsttätig absenkt.

Bei einer vorteilhaften Weiterbildung weist die Stützstruktur äußeren unteren Endbereiche auf. Die Auftriebskörper sind ist im Wesentlichen oberhalb dieser äußeren unteren Endbereiche angeordnet. Die derartige Anordnung der Auftriebskörper führt zu einer besonderen Stabilisierung des schwimmenden Offshore-Fundaments bezogen auf dessen Hochachse im radial äußeren Bereich und erhöht dadurch die Stabilität der zu stützenden Windkraftanlage beim Transport und nach der Verankerung.

Um die vorgesehenen Auftriebskörper bei großem Auftriebsvolumen materialgünstig herstellen zu können, sind diese vorteilhaft im Wesentlichen ballonförmig bzw. tropfenförmig oder kugelförmig gestaltet. Ferner sind bevorzugt mehrere Auftriebskörper vorgesehen, mit denen an der Stützstruktur des Offshore-Fundaments gezielt in bestimmten Bereichen Auftriebskräfte erzeugt und gegebenenfalls auch eine Redundanz dieser Abtriebskräfte gewährleistet werden kann. Die Zahl der Auftriebskörper beträgt mindestens drei und ist besonders bevorzugt ungerade gehalten.

Im Hinblick auf eine dauerhaft sichere Schwimmlage des Offshore-Fundaments ist es ferner von Vorteil, die Auftriebskörper im Inneren mit mehreren flüssigkeitsdicht gegeneinander abgegrenzten Kammern zu versehen. Hierdurch wird bei Leckage einzelner Kammern oder im Havariefall jedenfalls Redundanz erzeugt.

Um zu verhindern, dass die Auftriebskörper des Offshore-Fundaments beispielsweise im Falle einer Schiffshavarie sich mit Wasser füllen und dadurch absenken könnten, sind die Auftriebskörper vorteilhaft im Inneren ganz oder teilweise mit einem festen Material gefüllt, welches ein geringeres spezifisches Gewicht aufweist, als Wasser und von diesem nicht aufgelöst werden kann. Dieses Material verhindert ein Eindringen von Wasser ins Innere der Auftriebskörper und stellt dadurch zugleich sicher, dass die Auftriebskörper zumindest eine Mindestauftriebskraft bereitstellen.

Damit die Auftriebskörper einerseits kostengünstig hergestellt und andererseits den an sie gestellten Anforderungen besonders gut gerecht werden, können die Auftriebskörper vorteilhaft mit einer Außenhülle und einer darin angeordneten fluiddichten Innenhülle gestaltet sein. Die Außenhülle kann vorteilhaft mit einem Netz gebildet sein, welches ausreichend Widerstand gegen äußere Umwelteinflüsse bietet. Die Innenhülle ist bevorzugt aus einem flexiblen Material gebildet, welches den Innendruck im Auftriebskörper halten kann.

Nachfolgend wird ein Ausführungsbeispiel einer Windkraftanlage mit einem schwimmenden Offshore-Fundaments anhand der beigefügten schematischen Zeichnungen näher erläutert.

### Es zeigen:

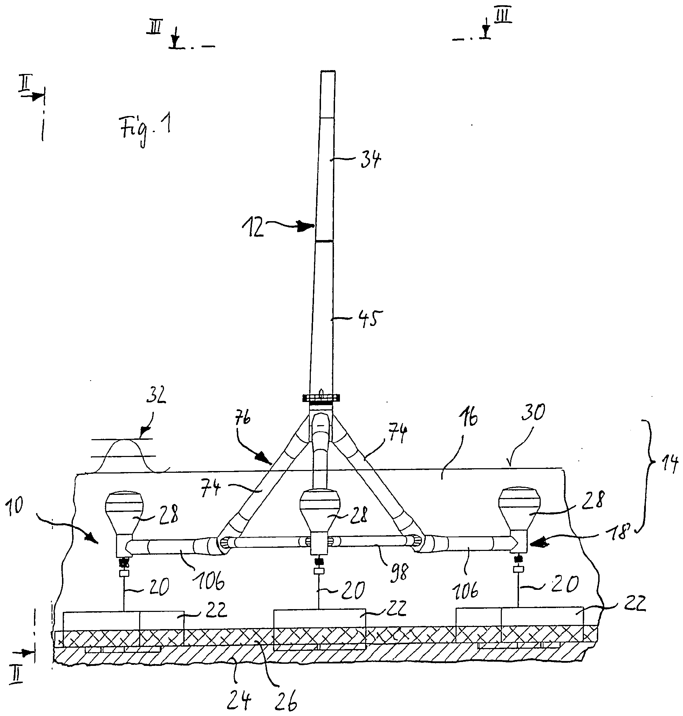

Fig. 1 die Vorderansicht des Ausfühungsbeispiels des schwimmenden Offshore-Fundaments mit einem darauf abgestützten Turm,

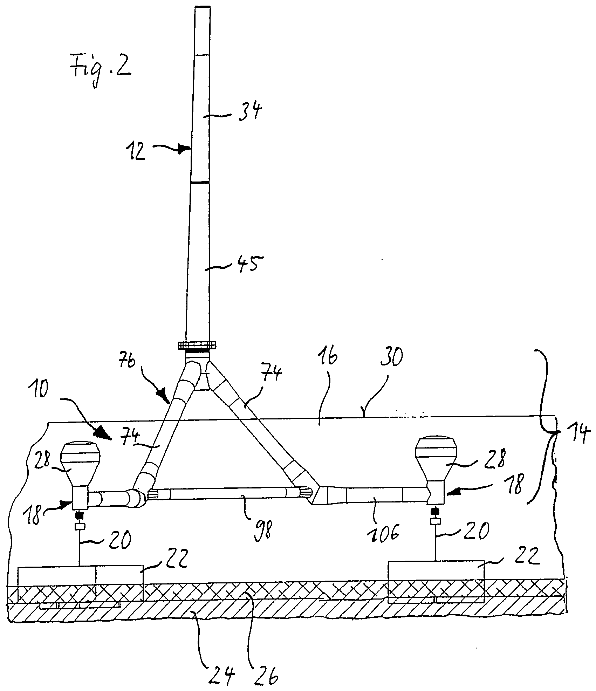

Fig. 2 die Seitenansicht II-II gemäß Figur 1,

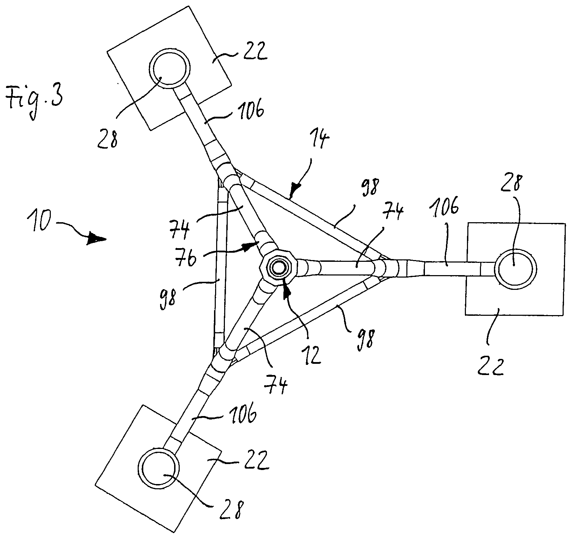

Fig. 3 die Draufsicht III-III gemäß Figur 1,
Fig. 4a eine Seitenansicht der oberen Hälfte des Turms gemäß Fig. 1,
Fig. 4b den Längsschnitt des Details IVb gemäß Figur 4a,
Fig. 4c den Längsschnitt des Details IVc gemäß Figur 4a,
Fig. 5a eine Seitenansicht der unteren Hälfte des Turms gemäß Fig. 1,
Fig. 5b den Längsschnitt des Details Vb gemäß Figur 5a,
Fig. 5c das Detail eines Mannloches am unteren Endbereich der unteren Hälfte des Turms gemäß Fig. 5a,
Fig. 5d den Querschnitt Vd-Vd gemäß Figur 5c,
Fig. 6a einen Längsschnitt des Turms gemäß Fig. 1,
Fig. 6b den Querschnitt Vlb-Vlb gemäß Fig. 6a,
Fig. 6c den Querschnitt Vlc-Vlc gemäß Fig. 6a,
Fig. 6d den Querschnitt Vld-Vld gemäß Fig. 6a,
Fig. 7a eine Seitenansicht eines Mittelrohrs des Knotens zur Befestigung des Turms am darunterliegenden restlichen Offshore-Fundament gemäß Figur 1,
Fig. 7b den Längsschnitt des Details Vllb gemäß Fig. 7a,
Fig. 8a eine Seitenansicht von Anschlüssen am Mittelrohr des Knotens gemäß Fig. 7a,
Fig. 8b die Draufsicht VIIIb-VIIIb gemäß Fig. 8a,
Fig. 8c die Seitenansicht VIIIc-VIIIc gemäß Fig. 8a,
Fig. 9 die Seitenansicht eines schrägen Stützrohrs des Offshore-Fundaments gemäß Fig. 1,
Fig. 10a eine Vorderansicht eines Unterwasserknotens am unteren Ende des schrägen Stützrohres gemäß Fig. 9,
Fig. 10b die Draufsicht Xb-Xb gemäß Fig. 10a,
Fig. 10c die Seitenansicht Xc-Xc gemäß Fig. 10a,
Fig. 11 eine Seitenansicht eines Querstabs des Offshore-Fundaments gemäß Fig. 1,
Fig. 12a eine Seitenansicht von links einer Anbindung am linken Endbereich des Querstabs gemäß Fig. 11,
Fig. 12b eine Seitenansicht von links einer Anbindung am rechten Endbereich des Querstabs gemäß Fig. 11,
Fig. 12c eine Seitenansicht von rechts der Anbindung gemäß Fig. 12b,
Fig. 12d eine Seitenansicht von rechts der Anbindung gemäß Fig. 12a,
Fig. 13a eine Seitenansicht eines waagrechten Auslegerarmes des Offshore-Fundaments gemäß Fig. 1,
Fig. 13b den Schnitt XIIIb-XIIIb gemäß Fig. 13a,
Fig. 13c eine Seitenansicht zum Schnitt gemäß Fig. 13b,
Fig. 14a eine Vorderansicht eines Auftriebskörpers des Offshore-Fundaments gemäß Figur 1,
Fig. 14b die Draufsicht XIVb-XIVb gemäß Fig. 14a,
Fig. 14c die Seitenansicht XIVc-XIVc gemäß Fig. 14a,
Fig. 15a eine perspektivische Ansicht des Offshore-Fundaments und des darauf befestigten Turmes gemäß Fig. 1,
Fig. 15b eine Draufsicht zur perspektivischen Ansicht gemäß Fig. 15a,
Fig. 15c die Seitenansicht XVc-XVc gemäß Fig. 15b,
Fig. 15d die Seitenansicht XVd-XVd gemäß Fig. 15b,
Fig. 16 eine perspektivische Detailansicht eines Gewichtsankers des Offshore-Fundaments gemäß Fig. 1 und Fig. 15a und
Fig. 17 eine perspektivische Detailansicht eines Zugelements zum Befestigen des Gewichtsankers an der Stützstruktur des Offshore-Fundaments gemäß Fig. 1 und Fig. 15a.

In den beigefügten Figuren ist ein Offshore-Fundament 10 veranschaulicht, welches zum schwimmenden Stützen einer Last 12 in Form eines Turmes für einen nicht dargestellten Generator nebst Flügelrad einer Windkraftanlage vorgesehen ist. Das Offshore-Fundament 10 ist mit einer Stützstruktur 14 aus Streben bzw. Stäben gebildet, welche im Wesentlichen in Wasser 16 getaucht und an ihrem unteren äußeren Endbereichen 18 mittels Zugmitteln 20 an Gewichtsankern 22 befestigt ist. Die Stützstruktur 14 ist dabei vollständig hohl ausgebildet bzw. mit einem Material gefüllt, welches ein geringeres spezifisches Gewicht als Wasser aufweist. Sie erzeugt dadurch eine Auftriebskraft, welche von den Gewichtsankern 22 zurückgehalten wird.

Die Gewichtsanker 22 sind am Grund 24 unter dem Wasser 16 aufgelegt und tauchen dabei durch eine sich dort befindende Schlickschicht 26 hindurch.

Um bei dem derart ausgebildeten Offshore-Fundament 10 auf kostengünstige Weise eine besonders stabile Lage zu erzielen und ferner das Offshore-Fundament 10 auf besonders kostengünstige Weise herstellen und errichten zu können, sind oberhalb der unteren äußeren Endbereiche 18 der Stützstruktur 14 jeweils Auftriebskörper 28 ausgebildet, so dass die Stützstruktur 14 sozusagen an diesen Auftriebskörpern 28 hängt. Die Auftriebskörper 28 sind mit Hilfe der Zugmittel 20 und Gewichtsanker 22 in vertikaler Richtung derart im Wasser 16 positioniert, dass sie sich noch unter einer Wasserlinie 30 befinden, welche den mittleren Wasserstand bezeichnet und ferner auch unter der so genannten Einhundertjahres-Bemessungswelle, welche beim Bezugszeichen 32 wiedergegeben ist, zu liegen kommen.

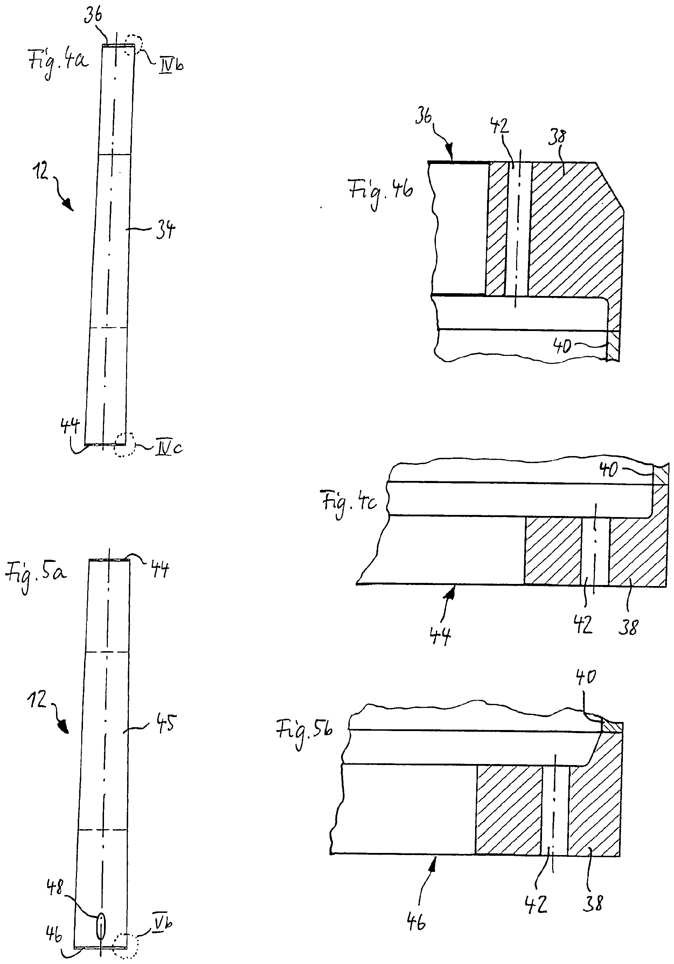

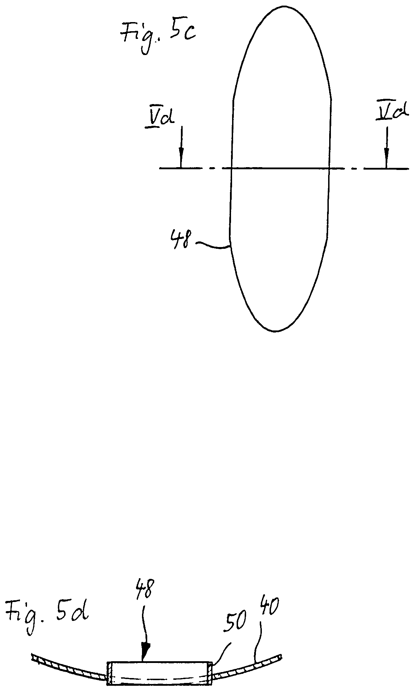

In den Figuren 4a bis 6d ist der im Wesentlichen die auf dem Offshore-Fundament 10 abgestützte Last 12 bildende Turm näher veranschaulicht. Der Turm umfasst einen oberen rohrförmigen Turmabschnitt 34, an dessen oberem Endbereich ein Kopfflansch 36 ausgebildet ist. Der Kopfflansch 36 ist mit einem Ringabschnitt 38 gebildet, an dessen unterem Ende ein Rohrwandabschnitt 40 angrenzt und der mit einer Vielzahl vertikal ausgerichteter Bohrungen 42 durchsetzt ist. Am unteren Endbereich des oberen Turmabschitts 34 ist ein Verbindungsflansch 44 am Rohrwandabschnitt 40 ebenfalls mit einem Ringabschnitt 38 ausgebildet. Ein solcher Verbindungsflansch 44 ist auch an einem sich im montierten Zustand unter dem oberen Turmabschnitt 34 befindenden unteren Turmabschnitt 45 ausgebildet. Der untere Turmabschnitt 45 weist ferner an seinem unteren Endbereich einen Fußflansch 46 auf, der wiederum mit einem Ringabschnitt 38 an einen Rohrwandabschnitt 40 des unteren Turmabschnitts 45 angrenzt. Der Ringabschnitt 38 des Fußflansches 46 ist dabei wiederum von Bohrungen 42 durchsetzt. Durch die genannten Bohrungen 42 können die einzelnen Turmabschnitte 34 und 45 untereinander und mit angrenzenden Bauelementen verschraubt werden. Am unteren Turmabschnitt 45 ist ferner im unteren Endbereich ein Mannloch 48 ausgebildet, welches in den Figuren 5c und 5d näher veranschaulicht ist. Das Mannloch 48 ist mit einem Rahmen 50 gestaltet, der in den Rohrwandabschnitt 40 des unteren Turmabschnitts 45 eingesetzt ist. Dieser Rahmen 50 weist einen oberen und einen unteren bogenförmigen Rand auf, während seine beiden Seitenabschnitte gerade gestaltet sind.

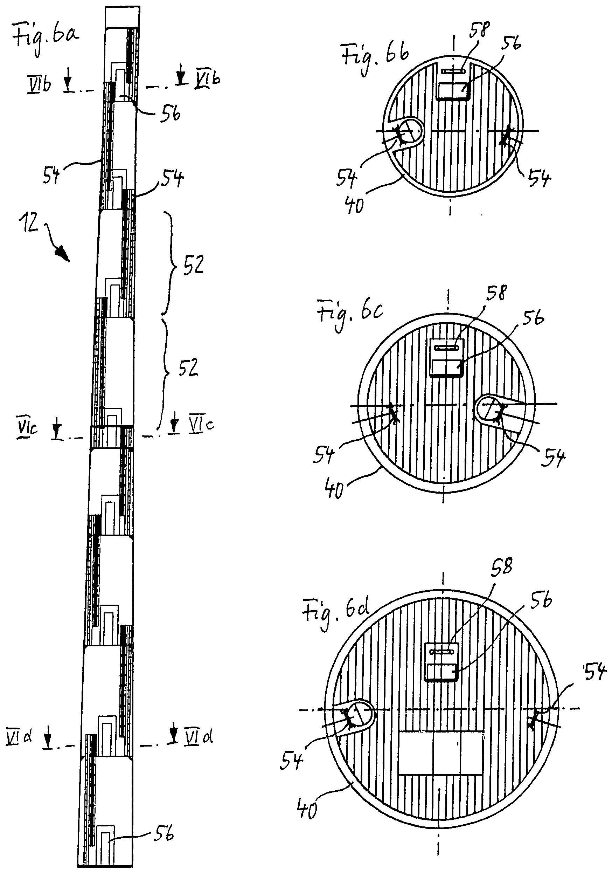

In den Figuren 6a bis 6d ist zu erkennen, dass der obere Turmabschnitt 34 und der untere Turmabschnitt 45 jeweils im Inneren mit Etagen 52 gestaltet sind, die über Anlegeleitern 54 und/oder einen Aufzug 56 zu erreichen sind. Ferner durchsetzt den oberen Turmabschnitt 34 und den unteren Turmabschnitt 45 ein Leitungsmast 58, an dem entlang weiter nicht dargestellte Leitungen vom Fuß des Turmes an dessen Kopfbereich verlegt werden können. Der derart ausgebildete Turm weist eine Höhe von ca. 60m und an seinem Fuß einen Durchmesser von ca. 4m auf, wobei sich der Fuß des Turmes im aufgebauten Zustand bei ca. 10m bis ca. 12m über der Wasserlinie 30 befindet, während der untere äußere Endbereich 80 in der Stützstruktur 14 bei ca. 13m unter dieser Wasserlinie 30 angeordnet ist.

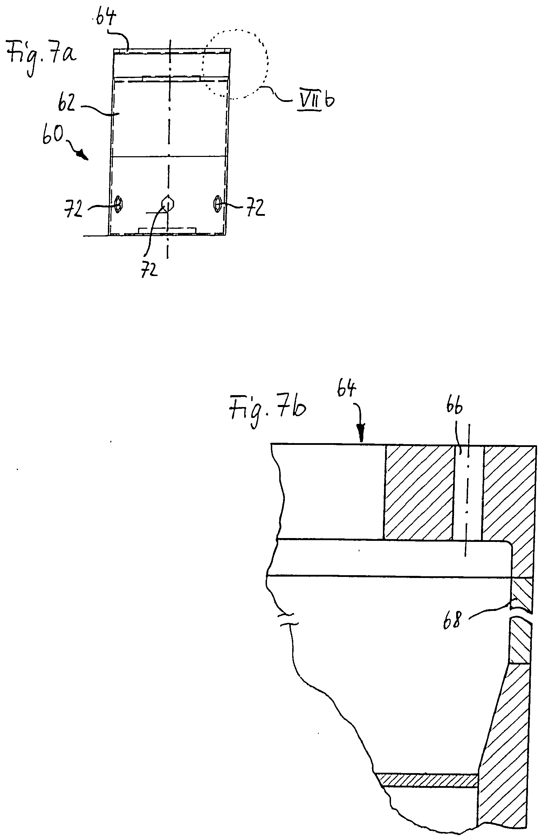

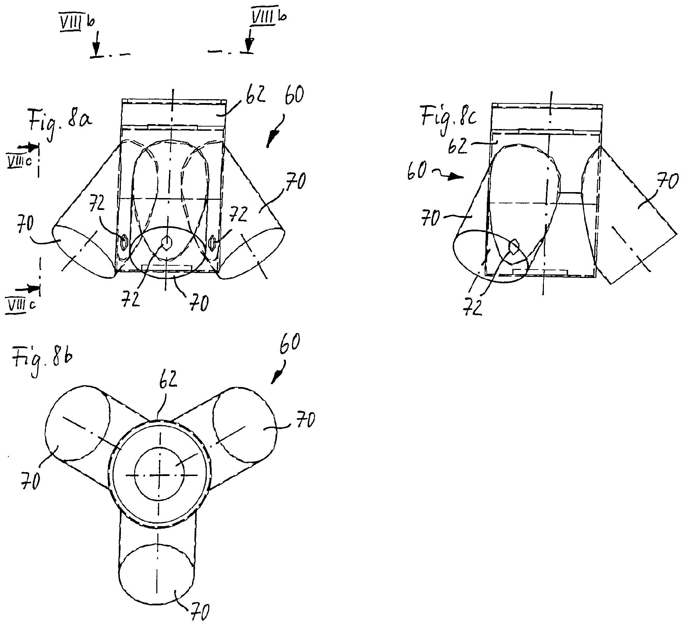

Die Figuren 7a bis 8c veranschaulichen einen Kopf bzw. Kopfknoten 60 der Stützstruktur 14, der sich unmittelbar unter dem Fuß des unteren Turmabschnitts 45 befindet. Der Kopf 60 ist mit einem Mittelrohr 62 gestaltet, an dessen oberen Endbereich ein Fußflansch 64 mit darin ausgebildeten vertikalen Bohrungen 66 an einen Rohrwandabschnitt 68 des Mittelrohres 62 angrenzt. An dem Mittelrohr 62 sind ferner insgesamt drei schräg nach unten gerichtete über den Außenumfang des Mittelrohres 62 gleichmäßig verteilt angeordnete Anschlussstutzen 70 ausgebildet. Diese Anschlussstutzen stehen von der vertikalen Achse des Mittelrohres 62 je ca. in einem Winkel von 30 deg. ab. Am Mittelrohr 62 sind ferner drei Mannlöcher 72 zum Einstieg vom Inneren des Mittelrohres 62 in das Innere der Anschlussstutzen 70 ausgebildet.

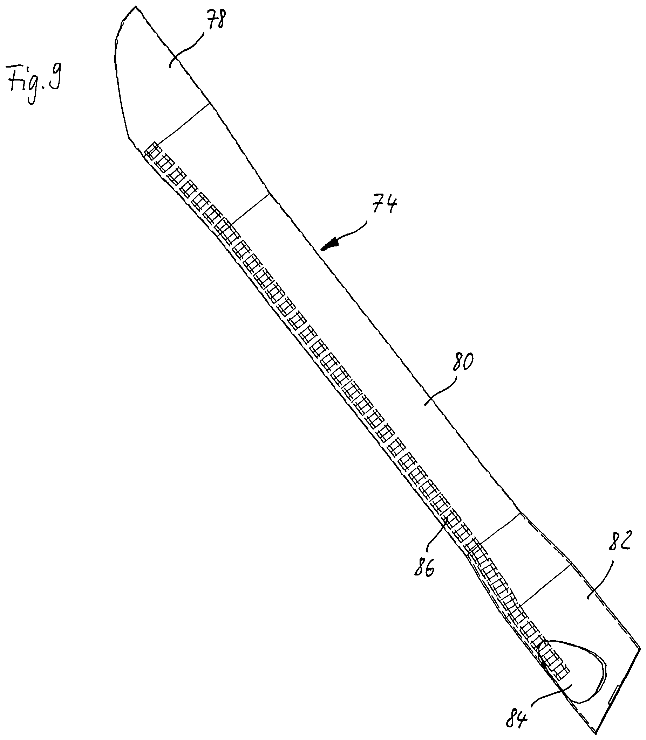

In Fig. 9 ist ein schräges Stützelement bzw. ein Stützstab 74 dargestellt, der ein Bein eines Dreibeins 76 bildet, welches sich unter dem Kopf 60 befindet. Das schräge Stützelement 74 ist mit einem oberen Anschlussabschnitt 78 gebildet, der auf einen der Anschlussstutzen 70 aufgeschoben und dort fluiddicht befestigt ist. An den oberen Anschlussabschnitt 78 schließt sich ein verjüngter Mittelabschnitt 80 sowie ein wiederum aufgeweiteter unterer Anschlussabschnitt 82 an. In dem unteren Anschlussabschnitt 82 sind zwei Öffnungen 84 ausgebildet. Ferner ist im Inneren des schrägen Stützelements 74 eine sich über dessen gesamte Länge erstreckende Trittleiter 86 ausgebildet.

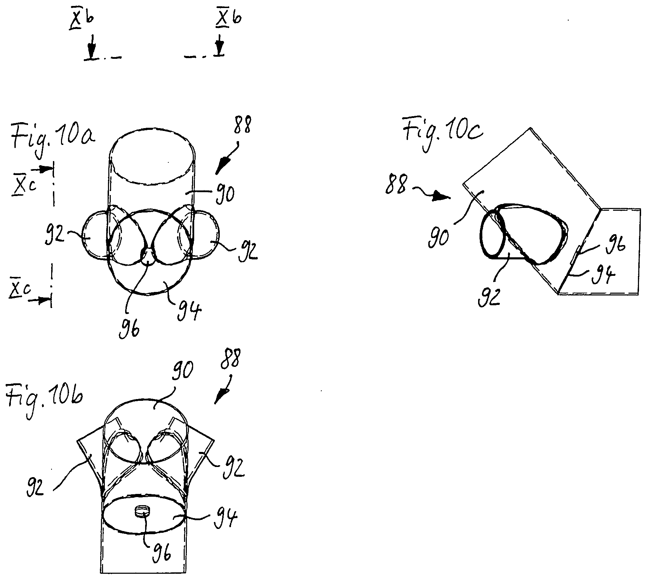

Die Figuren 10a bis 10c zeigen einen sich im unteren Anschlussabschnitt 82 des schrägen Stützelements 74 teilweise befindenden Unterwasserknoten 88, der als wesentliches Element ein gewinkeltes Mittelrohr 90 umfasst. An einen der Winkelabschnitte des Mittelrohres 90 sind zwei Anschlussstutzen 92 angebracht, die im aufgebauten Zustand des Dreibeins 76 in Richtung der jeweils anderen Beine dieses Dreibeins 76 zeigen. An der Knickstelle des Mittelrohres 90 ist eine Schottwand 94 ausgebildet, in der sich eine Durchgangsöffnung 96 befindet.

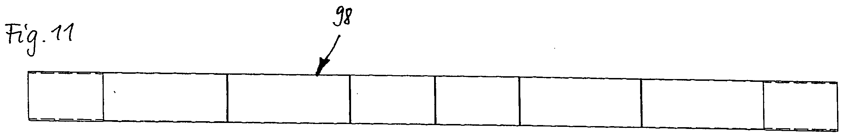

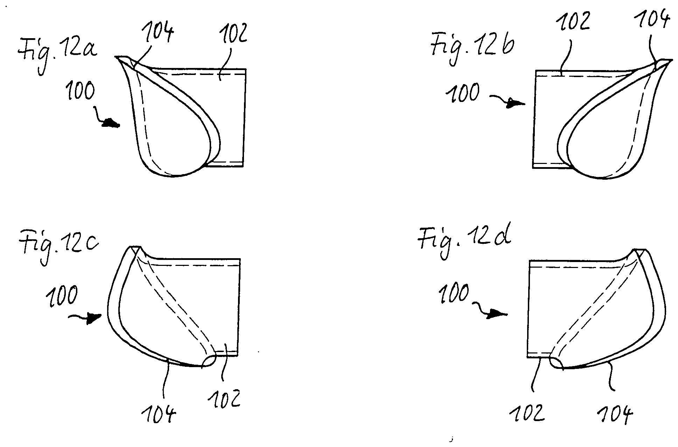

In der Fig. 11 ist einer der Querstäbe 98 dargstellt, welche sich im aufgebauten Zustand zwischen den Beinen bzw. Stützenelementen 74 des Dreibeins 76 auf der Höhe der Unterwasserknoten 88 erstrecken. Die einzelnen Querstäbe 98 verbinden dabei jeweils zwei Anschlussstutzen 92 zweier Beine in im Wesentlichen horizontaler Richtung. Die Querstäbe 98 sind jeweils aus einzelnen miteinander verschweißten Rohrabschnitten gebildet. An ihren Endbereichen weisen sie jeweils eine Anbindung 100 auf, wie sie in den Figuren 12a bis 12d dargestellt sind. Diese Anbindungen 100 sind aus Guss hergestellt und weisen einen den jeweiligen Endbereich eines Querstabes 98 überdeckenden Rohrabschnitt 102 sowie einen an diesen Rohrabschnitt angrenzenden Kragenabschnitt 104 auf. Die einzelnen Kragenabschnitte 104 sind dabei derart ausgebildet, dass sie an dem zugehörigen Mittelrohr 90 der Unterwasserknoten 88 fluiddicht anliegen.

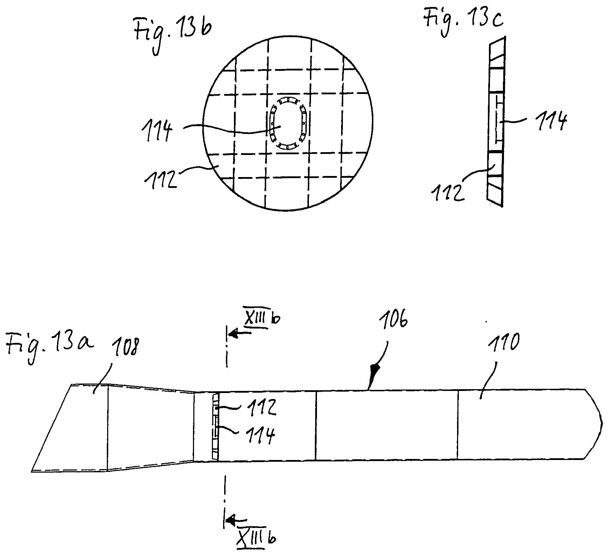

Die Figuren 13a bis 13c zeigen einen sich von dem jeweiligen Unterwasserknoten 88 bezogen auf die Hochachse der Stützstruktur 14 in radialer Richtung erstreckenden Auslegerarm 106. Von diesen Auslegerarmen 106 sind an der Stützstruktur 14 drei Stück vorgesehen, wobei sie einzeln mit einem an den zugehörigen Unterwasserknoten 88 angrenzenden Anschlussabschnitt 108 und einem dazu verjüngt ausgebildeten anschließenden Auslegerabschnitt 110 ausgebildet sind. Zwischen dem Anschlussabschnitt 108 und dem Auslegerabschnitt 110 ist eine Schottwand 112 vorgesehen, in der sich eine Durchgangsöffnung 114 befindet.

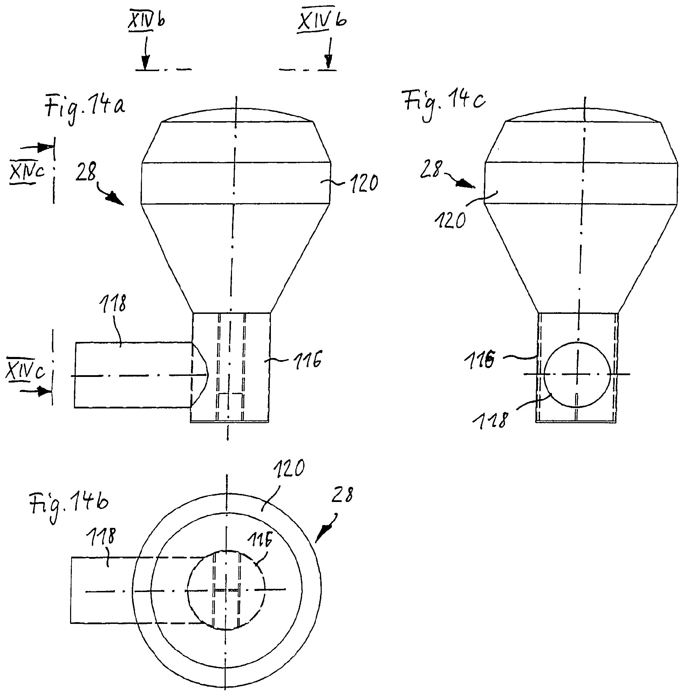

Die Figuren 14a bis 14c zeigen schließlich einem der oben bereits erwähnten Auftriebskörper 28, welche sich oberhalb des unteren äußeren Endbereichs 18 der Stützstruktur 14 befinden. Diese Auftriebskörper 28 haben unter sich ein Grundrohr 116, welches vertikal ausgerichtet ist und mit einem horizontal ausgerichteten Anschlussstutzen 118 fluiddicht an einen der Auslegerabschnitte 110 eines Auslegerarms 106 angeschlossen sind. Die Auftriebskörper 28 sind im Wesentlichen aus einem so genannten Ballonkörper 120 gebildet, dessen Grundform in etwa jener eines Heißluftballons entspricht. Dieser Ballonkörper 120 ist aus Sicherheitsgründen im Inneren in einzelne, weiter nicht dargestellte Kammern unterteilt. Wahlweise kann er auch mit einem Material zumindest abschnittsweise gefüllt sein, welches ein geringeres spezifisches Gewicht aufweist als Wasser. Die Ballonkörper 120 bilden damit einen wesentlichen Teil der Auftriebskraft der Struktur 14 und tragen aufgrund ihrer Lage oberhalb des unteren äußeren Endbereichs 18 wesentlich zu einer stabilen Lage dieser Stützstruktur 14 bei. Sie ermöglichen ferner, dass die Stützstruktur 14 auch samt der Last 12 schwimmend zum Ort der Errichtung des Offshore-Fundaments 10 verbracht werden kann.

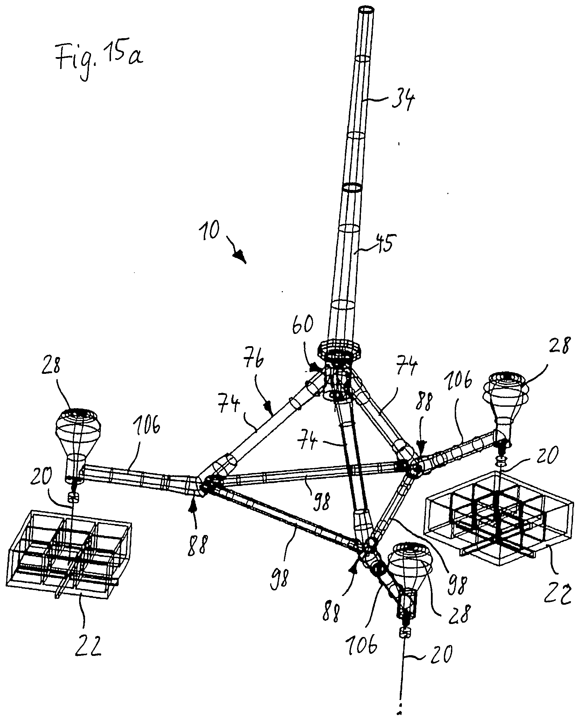

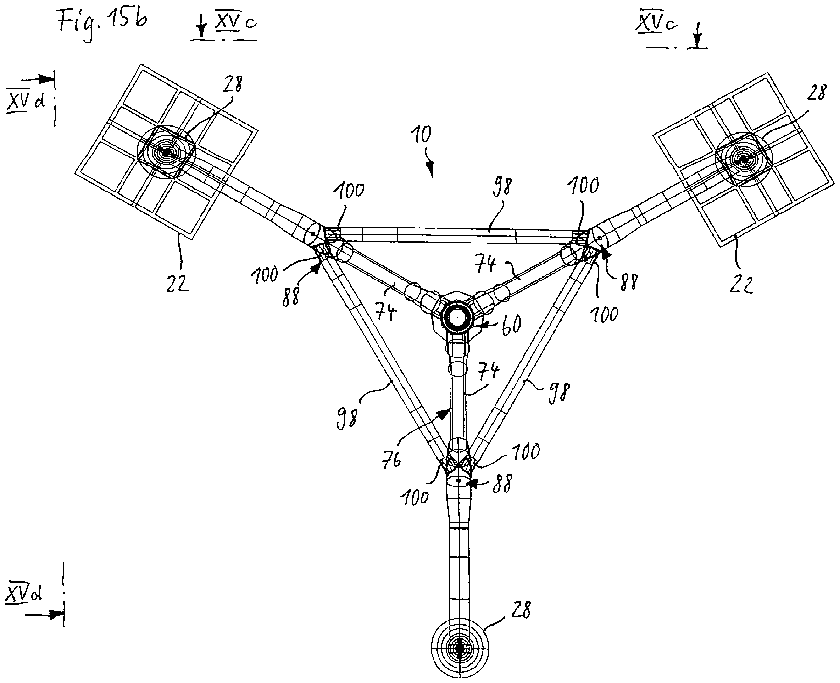

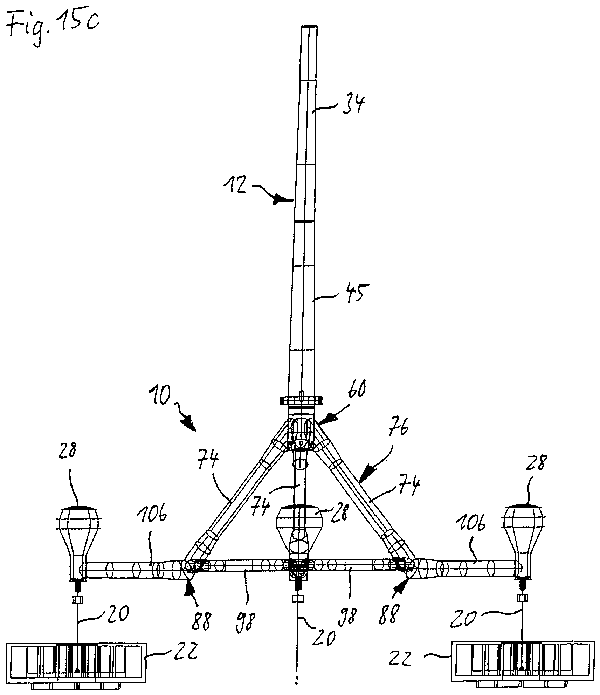

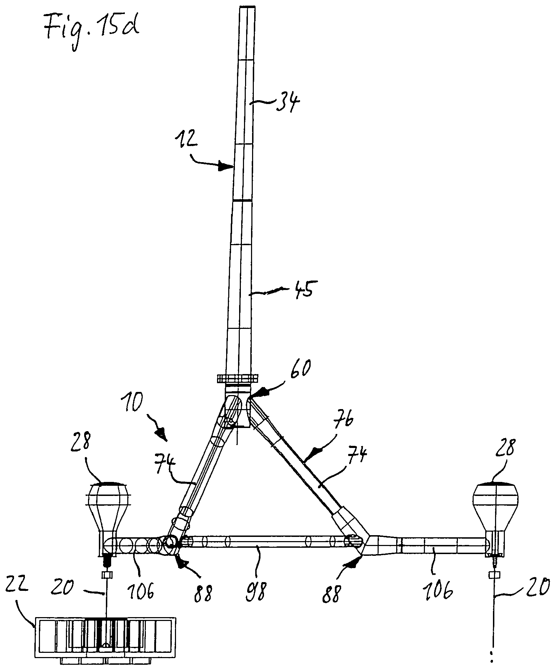

In den Figuren 15a bis 15d ist insbesondere die derart ausgebildete Stützstruktur 14 nochmals in mehreren Ansichten veranschaulicht. Dabei ist noch anzumerken, dass die Elemente schräge Stützelemente 74, Auslegerarme 106, die Querstäbe 98 und Auftriebskörper 28 jeweils aus Stahl hergestellt sind, während der Kopf 60 und die Unterwasserknoten 88 aus Guss gebildet sind. Mit anderen Worten sind bei diesem Ausführungsbeispiel sämtliche Knoten aus Guss, während die röhrförmigen Stützelemente aus Stahl hergestellt sind. Alternativ können sämtliche Elemente der Stützstruktur aus Stahl oder aus Stahlbeton hergestellt sein. Auch die Verwendung von glasfaserverstärktem Kunststoff wird bevorzugt angestrebt.

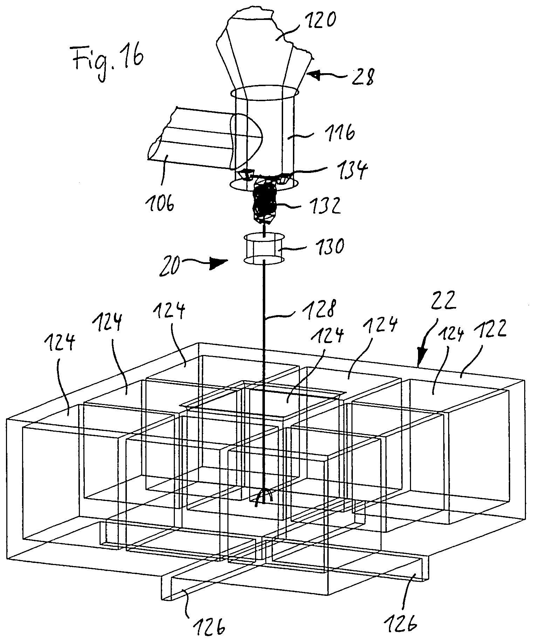

In der Fig. 16 ist einer der Gewichtsanker 22 des Offshore-Fundaments 10 nochmals im Detail veranschaulicht. Der Gewichtsanker 22 ist mit einer kastenförmigen Grundschale 122 gebildet, in der insgesamt neun Kammern 124 ausgebildet sind. Die Kammern 124 sind im Wesentlichen würfelförmig und zu je drei Stück in drei Reihen angeordnet. In der Mittleren der Kammern 124 ist das oben bereits erwähnte Zugmittel 20 derart eingegossen, dass es nach oben gerichtete Zugkräfte aufnehmen kann. Die Kammern 124 können einzeln mit Wasser geflutet oder mit Material gefüllt werden, welches ein höheres spezifisches Gewicht als Wasser aufweist. Unter der Grundschale 122 ist ferner eine kreuzförmige Bodenversteifung 126 ausgebildet, die als ein Steg gestaltet ist, mit dem der zugehörige Gewichtsanker 22 auf dem Boden zu liegen kommt und dort gegebenenfalls in eine Schlickschicht eindringt

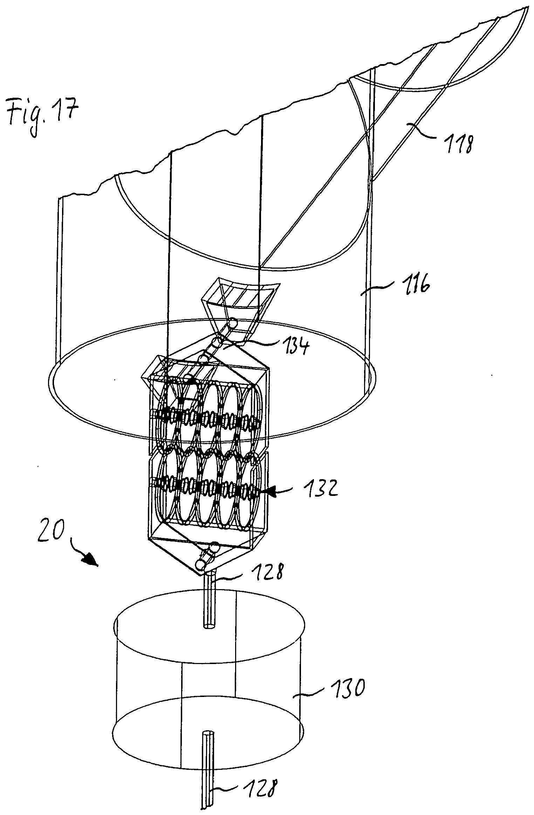

Wie schließlich insbesondere in Fig. 17 zu erkennen ist, ist das einzelne Zugmittel 20 mit einem Zugseil 128 gebildet, das abschnittsweise von einer Boje 130 umgeben ist. Am oberen Endbereich des Zugseiles 128 befindet sich ein Flaschenzug 132 dessen oberer Teil sich unmittelbar unter einer Hängevorrichtung 134 befindet. Die Hängevorrichtung 134 ist am unteren Ende eines der Grundrohre 116 von einem der unteren äußeren Endbereiche 18 Zugkraft übertragend befestigt.

## Patentansprüche

1. Windkraftanlage mit einem schwimmenden Offshore-Fundament (10) umfassend
- die Windkraftanlage,
- eine Stützstruktur (14) vollständig aus hohlen rohrförmigen Stützelementen (74, 98, 106), die mittels Knotenpunkten (60, 88) flüssigkeitsdicht miteinander verbunden sind,
- einen die Windkraftanlage stützenden Mittelbereich als Mehrbein (76) mit einem äußeren, unteren Fußbereich (82, 88), wobei das Mehrbein (76) einen daran oben ausgebildeten Kopf (60) als Koppelemelent über Wasseroberfläche aufweist, mit dem die Beine (74) des Mehrbeins (76) miteinander verbunden sind, und die unteren Fußbereiche (82, 88) von zwei sich nebeneinander befindenden Beinen (74) des Mehrbeins (76) durch einen hohl ausgebildeten und dem Auftrieb dienenden Querstab (98) verbunden sind, mit der die Gewichtskraft der zu stützenden Last (12) nach unten geleitet ist und die einen unteren Endbereich (18) aufweist, der sich bei verankerter Lage des Offshore-Fundaments (10) unter Wasser (16) befindet,
- Zugelemente, wobei unterhalb des äußeren unteren Endbereichs (18) der Stützstruktur (14) Anlenkbereiche zum Befestigen der Zugelemente (20) ausgebildet sind, mit denen das Offshore-Fundament (10) unter Wasser (16) verankerbar ist,
**dadurch gekennzeichnet,**
**dass** sich Auftriebskörper (28) unter Wasser befinden, mit denen eine der Gewichtskraft entgegenwirkender Auftriebskraft erzeugt ist, ,
**dass** die Auftriebskörper (28) oberhalb des unteren Endbereichs (18) der Stützstruktur (14) angeordnet sind
**dass** eine Verankerung (20, 22) mit mindestens einem Gewichtsanker (22) zum Halten der Auftriebskörper (28) in einer vordefinierten Tiefe unter der Wasseroberfläche (30) vorhanden ist,
wobei der eine Gewichtsanker (22) mit einer befüllbaren Außenhülle (122) aus Stahlbeton mit mehreren einzeln zu befüllenden Kammern ausgestaltet ist,
so dass die Außenhülle (122) des Gewichtsankers (22) im unbefüllten Zustand schwimmfähig ist, die Außenhülle (122) des Gewichtsankers (22) dazu angepasst ist, mit Wasser (16) geflutet zu werden, um sie auf den Meeresgrund (24, 26) abzusenken, und die Außenhülle (122) des Gewichtsankers (22) dazu angepasst ist, darin ein Material einzufüllen, welches ein höheres spezifisches Gewicht als Wasser aufweist.

2. Windkraftanlage nach Patentanspruch 1, **dadurch gekennzeichnet, dass** die Stützstruktur (14) äußere unteren Endbereiche (18) aufweist und die Auftriebskörper (28) im Wesentlichen oberhalb dieser äußeren unteren Endbereiche (18) angeordnet sind.

3. Windkraftanlage nach Patentanspruch 1 oder 2, **dadurch gekennzeichnet, dass** die Auftriebskörper (28) im Wesentlichen ballonförmig gestaltet sind.

4. Windkraftanlage nach den Patentansprüchen 1 bis 3, **dadurch gekennzeichnet, dass** die Auftriebskörper (28) im Inneren mehrere flüssigkeitsdicht gegeneinander abgegrenzte Kammern (124) aufweisen.

5. Windkraftanlage nach den Patentansprüchen 1 bis 4, **dadurch gekennzeichnet, dass** die Auftriebskörper (28) im Inneren ganz oder teilweise mit einem festen Material gefüllt sind, welches ein geringeres spezifisches Gewicht aufweist, als Wasser und von diesem nicht aufgelöst werden kann.

6. Windkraftanlage nach einem der Patentansprüche 1 bis 5, **dadurch gekennzeichnet, dass** die Auftriebskörper (28) eine Außenhülle und eine darin angeordnete fluiddichte Innenhülle aufweisen.

7. Windkraftanlage nach einem der Patentansprüche 1 bis 6, **dadurch gekennzeichnet, dass** an einem äußeren unteren Fußbereich (82, 88) des Mehrbeins (76) ein nach außen ragender Arm (106) ausgebildet ist.

8. Windkraftanlage nach Patentanspruch 1, **dadurch gekennzeichnet, dass** mehrere, einzeln zu befüllende Kammern (124) um einen an dem Gewichtsanker (22) ausgebildeten Zentralbereich ausgebildet sind.

## Claims

1. Wind turbine having a floating offshore foundation (10) which comprises
- the wind turbine,
- a support structure (14) consisting entirely of hollow tubular support elements (74, 98, 106) which are interconnected by means of node points (60, 88) so as to be liquid-tight,
- a central region which supports the wind turbine and is in the form of a multi-leg structure (76) comprising an outer lower foot region (82, 88), the multi-leg structure (76) having a head (60) formed thereabove, and thereon, which acts as a coupling element above water level, and by means of which the legs (74) of the multi-leg structure (76) are interconnected, and the lower foot regions (82, 88) of two adjacent legs (74) of the multi-leg structure (76) being connected by means of a hollow transverse rod (98) which is conducive to buoyancy, by means of which support structure the gravitational force of the load to be supported (12) is directed downwards and support structure comprises a lower end region (18) which is under water (16) when the offshore foundation (10) is in an anchored position,
- tension elements, articulated regions for fastening the tension elements (20) being formed below the outer lower end region (18) of the support structure (14), by means of which articulated regions the offshore foundation (10) can be anchored under water (16), **characterised**
**in that** buoyancy bodies (28) are under water, by means of which a buoyancy force is generated which counteracts the gravitational force,
**in that** the buoyancy bodies (28) are arranged above the lower end region (18) of the support structure (14),
**in that** an anchoring means (20, 22) is provided which comprises at least one weight anchor (22) for holding the buoyancy bodies (28) at a predefined depth below the water level (30), the weight anchor (22) which has a fillable outer shell (122) made of reinforced concrete being designed having a plurality of chambers to be filled individually,
such that the outer shell (122) of the weight anchor (22) can float when empty, the outer shell (122) of the weight anchor (22) is adapted to being flooded with water (16) so as to be brought down to the sea bed (24, 26), and the outer shell (122) of the weight anchor (22) is adapted to being filled with a material that has a higher specific gravity than water.

2. Wind turbine according to claim 1, **characterised in that** the support structure (14) comprises outer lower end regions (18) and the buoyancy bodies (28) are arranged substantially above said outer lower end regions (18).

3. Wind turbine according to either claim 1 or claim 2, **characterised in that** the buoyancy bodies (28) are substantially balloon-shaped.

4. Wind turbine according to claims 1 to 3, **characterised in that** the buoyancy bodies (28) comprise, in the interior thereof, a plurality of chambers (124) that are separated from one another so as to be liquid-tight.

5. Wind turbine according to claims 1 to 4, **characterised in that** the interior of the buoyancy bodies (28) is entirely or partially filled with a solid material which has a lower specific gravity than water and which cannot be dissolved in water.

6. Wind turbine according to any of claims 1 to 5, **characterised in that** the buoyancy bodies (28) have an outer shell and a fluid-tight inner shell arranged therein.

7. Wind turbine according to any of claims 1 to 6, **characterised in that** an outwardly projecting arm (106) is formed on an outer lower foot region (82, 88) of the multi-leg structure (76).

8. Wind turbine according to claim 1, **characterised in that** a plurality of chambers (124) to be filled individually are formed around a central region formed on the weight anchor (22).

## Revendications

1. Éolienne avec fondation offshore flottante (10) comprenant
- l'éolienne ;
- une structure de support (14), entièrement constituée d'éléments de support tubulaires creux (74, 98, 106) reliés entre eux de manière étanche aux liquides au moyen de points nodaux (60, 88),
- une zone centrale soutenant l'éolienne comme jambe multiple (76) avec une zone de support inférieure extérieure (82, 88), la jambe multiple (76) présentant une tête formée en haut (60) comme élément de couplage au-dessus de la surface de l'eau, avec lequel les jambes (74) de la jambe multiple (76) sont reliées les unes aux autres, et les zones de support inférieures (82, 88) étant reliées par deux jambes (74) de la jambe multiple (76) disposées côte à côte, formées d'un trou et reliées par une barre transversale d'entraînement (98), par laquelle le poids de la charge à supporter (12) est transféré vers le bas et présentant une extrémité (18) inférieure qui se trouve sous l'eau (16) lorsque la fondation offshore (10) est ancrée ;
- des éléments de tension, des zones articulées pour la fixation des éléments de tension (20) étant formées au-dessous de la partie d'extrémité (18) inférieure extérieure de la structure de support (14), avec lesquelles la fondation offshore (10) est ancrée sous l'eau (16), **caractérisée en ce que**
des corps de poussée aérodynamique (28) sont sous l'eau, avec lesquels une force de poussée aérodynamique s'opposant au poids est générée,
les corps de poussée aérodynamique (28) sont disposés au-dessus de la région d'extrémité (18) inférieure de la structure de support (14),
un ancrage (20, 22) avec au moins une ancre de poids (22) pour maintenir les corps de poussée aérodynamique (28) à une profondeur prédéfinie sous la surface de l'eau (30), ladite ancre de poids (22) étant équipée d'une coque extérieure (122) pouvant être remplie fabriquée en béton armé conçu avec plusieurs chambres individuelles de remplissage,
afin que la coque extérieure (122) de l'ancre de poids (22) puisse flotter à l'état non rempli, la coque extérieure (122) de l'ancre de poids (22) est conçue pour pouvoir être inondée d'eau (16) afin de l'amener sur le fond marin (24, 26), et la coque extérieure (122) de l'ancre de poids (22) est adaptée pour la remplir d'un matériau présentant une densité supérieure à celle de l'eau.

2. Éolienne selon la revendication 1, **caractérisé en ce que** la structure de support (14) présente des extrémités (18) inférieures extérieures, et que les corps de poussée aérodynamique (28) sont disposés sensiblement au-dessus desdites extrémités (18) inférieures extérieures.

3. Éolienne selon la revendication 1 ou 2, **caractérisée en ce que** les corps de poussée aérodynamique (28) sont conçus sensiblement en forme de ballon.

4. Éolienne selon les revendications 1 à 3, **caractérisée en ce que** les corps de poussée aérodynamique (28) comportent, à l'intérieur, une pluralité de chambres délimitées étanches aux liquides (124).

5. Éolienne selon les revendications 1 à 4, **caractérisée en ce que** les corps de poussée aérodynamique (28) sont remplis totalement ou en partie avec un matériau solide présentant une densité spécifique inférieure à celle de l'eau, et insoluble dans celle-ci.

6. Éolienne selon l'une des revendications 1 à 5, **caractérisée en ce que** les corps de poussée aérodynamique (28) présentent une coque extérieure et une coque interne étanche aux fluides disposée dans celle-ci.

7. Éolienne selon l'une des revendications 1 à 6, **caractérisée en ce qu'**un bras faisant saillie vers l'extérieur (106) est formé au niveau d'une zone de support (82, 88) inférieure extérieure de la jambe multiple (76).

8. Éolienne selon la revendication 1, **caractérisée en ce que** plusieurs chambres (124) à remplir individuellement sont formées autour d'une zone centrale formée sur l'ancre de poids (22).
